# EUROPÄISCHE PATENTSCHRIFT

(11) **EP 2 568 166 B1**
(45) Veröffentlichungstag und Bekanntmachung des Hinweises auf die Patenterteilung: **15.07.2015**
(21) Anmeldenummer: 11007383.0
(22) Anmeldetag: 09.09.2011
(51) Int. Cl.: F03D 1/06

(54) **Windenergieanlagenrotorblatt mit einer dicken Profilhinterkante**
Wind energy assembly rotor blade with a thick profile trailing edge
Pale de rotor d'éolienne dotée d'un rebord arrière à profil épais

(43) Veröffentlichungstag der Anmeldung: 13.03.2013
(73) Patentinhaber: Nordex Energy GmbH, 22419 Hamburg (DE)
(72) Erfinder: Fischer, Gunter, 22081 Hamburg (DE)
(74) Vertreter: Hauck Patentanwaltspartnerschaft mbB

(56) Entgegenhaltungen:
- WO-A1-2007/071249
- WO-A2-2010/100237
- US-A- 5 252 381
- US-A1- 2010 296 940

## Beschreibung

Die Erfindung betrifft ein Windenergieanlagenrotorblatt mit einer Blattwurzel, einer Blattspitze und einem aerodynamischen Profil, das in einem Längsabschnitt des Rotorblatts ausgebildet ist und eine Druckseite, eine Saugseite, eine Profilnasenkante, eine Profilsehne und eine Profilhinterkante mit einem saugseitigen Endpunkt, an dem die Saugseite und die Profilhinterkante zusammentreffen, und einem von dem saugseitigen Endpunkt beabstandeten druckseitigen Endpunkt, an dem die Druckseite und die Profilhinterkante zusammentreffen, aufweist. Derartige Profile für Windenergieanlagenrotorblätter werden auch als Profile mit dicker Hinterkante bezeichnet, weil das in Strömungsrichtung betrachtet hintere Ende des Rotorblatts nicht eine von den unter einem spitzen Winkel unmittelbar zusammenlaufenden druck- und saugseitigen Flächen gebildete, linienförmige Hinterkante, sondern eine Hinterkante mit einer erheblichen Dicke, also eine rückwärtige Fläche, aufweist.

Derartige Windenergieanlagenrotorblattprofile sind beispielsweise aus der Druckschrift DE 10 2008 003 411 A1 bekannt geworden. Bei den aus dieser Druckschrift bekannten Profilen verläuft die Profilhinterkante senkrecht zur Profilsehne.

Aus der Druckschrift EP 2 022 979 A1 ist ebenfalls ein Windenergieanlagenrotorblattprofil mit einer dicken Hinterkante bekannt geworden. In einem Hinterkantenbereich soll die Dicke des Profils zu der dicken Hinterkante hin zunehmen, sodass Saugseite und Druckseite nahe der Hinterkante divergieren.

Aus der Druckschrift WO 2007/071249 A1 ist ein Windenergieanlagenrotorblatt bekannt geworden, dessen Hinterkantenbereich von einem gesonderten Bauelement mit konstantem Querschnitt gebildet ist. Dieses gesonderte Bauelement bildet eine dünne Profilhinterkante. In der Figur 1 der Druckschrift ist ein Rotorblatt gemäß dem in der Druckschrift vorausgesetzten Stand der Technik dargestellt. Dieses weist in einem nahe der Blattwurzel angeordneten Querschnitt ein aerodynamisches Profil mit einer dicken Hinterkante auf. Die Hinterkante ist in einem Winkel gegenüber der Saugseite abgeschnitten.

US-Patent Nr. 5,252,381 beschreibt ein aerodynamisches Profil mit einer dicken Hinterkante, die gegenüber der Profilsehne in einem Winkel von weniger als 90° angeordnet ist.

Die Druckschrift WO 2010/100237 A2 zeigt ein Windenergieanlagenrotorblatt mit einem Hauptprofil, das eine dicke Hinterkante aufweist. Hinter dem Hauptprofil ist eine Klappe, die ebenfalls ein aerodynamisches Profil aufweist, angeordnet. Das Hauptprofil weist die Merkmale des Oberbegriffs des Anspruchs 1 auf.

Davon ausgehend ist es die Aufgabe der Erfindung, ein Windenergieanlagenrotorblatt mit einer verbesserten aerodynamischen Leistungsfähigkeit zur Verfügung zu stellen.

Diese Aufgabe wird gelöst durch das Windenergieanlagenrotorblatt mit den Merkmalen des Anspruchs 1. Vorteilhafte Ausgestaltungen sind in den sich anschließenden Unteransprüchen angegeben.

Das Windenergieanlagenrotorblatt hat eine Blattwurzel, eine Blattspitze und ein aerodynamisches Profil, das in einem Längsabschnitt des Rotorblatts ausgebildet ist und eine Druckseite, eine Saugseite, eine Profilnasenkante, eine Profilsehne und eine Profilhinterkante mit einem saugseitigen Endpunkt, an dem die Saugseite und die Profilhinterkante zusammentreffen, und einen von dem saugseitigen Ende beabstandeten druckseitigen Endpunkt, an dem die Druckseite und die Profilhinterkante zusammentreffen, aufweist, wobei ein Winkel α zwischen der Profilsehne und der Profilhinterkante kleiner ist als 90° und der saugseitige Endpunkt in Richtung der Profilsehne näher an der Profilnasenkante angeordnet ist als der druckseitige Endpunkt.

Das Windenergieanlagenrotorblatt kann aus einem faserverstärkten Kunststoffmaterial gefertigt sein, insbesondere aus zwei sich über die gesamte Länge des Windenergieanlagenrotorblatts erstreckenden Halbschalen, die entlang der Vorderkante und der Hinterkante des Windenergieanlagenrotorblatts zusammengefügt sind, insbesondere durch Verkleben.

An der Blattwurzel kann das Windenergieanlagenrotorblatt im Querschnitt im Wesentlichen kreisförmig ausgebildet sein und einen Befestigungsflansch zur Befestigung an einer Rotornabe aufweisen. Die Druckseite bezeichnet die zwischen Profilnasenkante und Profilhinterkante befindliche Fläche des Rotorblatts, an der im Betrieb in der Regel ein Überdruck entsteht. Die Saugseite bezeichnet die Fläche des Rotorblatts zwischen Profilnasenkante und Profilhinterkante, an der im Betrieb in der Regel ein Unterdruck entsteht. Die Druckseite kann konvex gekrümmt sein. Sie kann zusätzlich einen konkav gekrümmten Abschnitt aufweisen, sodass sie insgesamt S-förmig gekrümmt ist.

Die Profilhinterkante befindet sich in einem in Anströmrichtung des Profils hinten befindlichen Bereich und erstreckt sich über eine gewisse Länge, entsprechend dem Abstand zwischen dem druckseitigen Endpunkt und dem saugseitigen Endpunkt. Zwischen diesen beiden Endpunkten kann die Profilhinterkante insbesondere geradlinig verlaufen. Die Profilhinterkante bildet eine rückwärtige Fläche des Rotorblatts, die entsprechend der über die Länge des Rotorblatts variierenden Profiltiefe gekrümmt verlaufen kann.

Ein in der Mitte zwischen dem druckseitigen Endpunkt und dem saugseitigen Endpunkt befindlicher Punkt der Profilhinterkante kann als Profilhinterkantenmittelpunkt bezeichnet werden. Dieser Profilhinterkantenmittelpunkt ist maßgeblich für die Position der Profilnasenkante, die sich definitionsgemäß an dem im größten Abstand von dem Profilhinterkantenmittelpunkt befindlichen Punkt des Profils befindet. Die Profilsehne verläuft geradlinig zwischen der so definierten Profilnasenkante und dem Profilhinterkantenmittelpunkt.

Bei der Erfindung ist ein Winkel α zwischen der Profilsehne und der Profilhinterkante kleiner als 90°. Außerdem ist der saugseitige Endpunkt in Richtung der Profilsehne näher an der Profilnasenkante angeordnet als der druckseitige Endpunkt. Mit anderen Worten ist die Profilhinterkante gegenüber einer herkömmlichen Anordnung, in der der Winkel α 90° beträgt, so gegenüber der Profilsehne geneigt, dass die Saugseite kürzer und die Druckseite länger wird.

Die Erfindung beruht auf der Erkenntnis, dass Windenergieanlagenrotorblätter in Längsabschnitten mit einer dicken Hinterkante ihren Vortrieb hauptsächlich durch einen vorderen Abschnitt der Saugseite und durch die Druckseite erzeugen. Im Vergleich dazu trägt insbesondere der hintere Teil der Saugseite, der nahe der dicken Profilhinterkante angeordnet ist, kaum zum Vortrieb bei, da es in diesem Bereich in der Regel zu Strömungsablösungen kommt. Daher wirkt sich ein Verkürzen der Saugseite nahe der Profilhinterkante kaum leistungsmindernd aus, während eine Verlängerung der Druckseite in diesem Bereich einen deutlich erhöhten Vortrieb bewirken kann. Insgesamt wird eine bessere aerodynamische Leistung des Windenergieanlagenrotorblatts erzielt.

In einer Ausgestaltung beträgt der Winkel α mindestens in einem Teil des Längsabschnitts 80° oder weniger. Beispielsweise kann der Winkel α auch 75° oder weniger, 70° oder weniger, 65° oder weniger oder 60° oder weniger betragen. Durch eine solche stärkere Neigung der Profilhinterkante gegenüber der Profilsehne kann von den erläuterten Vorteilen in besonders großem Maße profitiert werden.

In einer Ausgestaltung erstreckt sich der Längsabschnitt über eine Länge im Bereich von 10% bis 40% der Gesamtlänge des Rotorblatts. Bei Windenergieanlagenrotorblättern unterscheiden sich die aerodynamischen Verhältnisse über die Länge des Rotorblatts aufgrund der Rotationsbewegung und der unterschiedlichen Anströmgeschwindigkeiten sowie die aus Festigkeitsgründen erforderlichen relativen Profildicken deutlich voneinander. Im Blattspitzenbereich ist die Verwendung dicker Hinterkanten auch bei erfindungsgemäßer Ausgestaltung in der Regel nicht sinnvoll. Bei einer Erstreckung des Längabschnitts im genannten Bereich können die vorteilhaften Wirkungen in der Regel voll ausgenutzt werden.

In einer Ausgestaltung weist der Längsabschnitt einen Abstand von 15% oder weniger der Gesamtlänge des Rotorblatts von der Blattwurzel auf. Insbesondere kann der Längsabschnitt nahe an der Blattwurzel beginnen, beispielsweise dort, wo der Querschnitt des Rotorblatts von seiner Kreisform unmittelbar an der Blattwurzel in ein aerodynamisches Profil übergeht. In diesem Bereich sind aus Festigkeitsgründen sehr große relative Blattdicken erforderlich. Bereits an dieser Stelle können die erfindungsgemäßen Vorteile verwirklicht werden.

In einer Ausgestaltung beträgt die relative Profildicke in dem Längsabschnitt 0,2 oder mehr. Die relative Profildicke ist definiert als maximale Profildicke geteilt durch die Länge der Profilsehne. Die erfindungsgemäße Neigung der Profilhinterkante ist bei großen relativen Profildicken besonders sinnvoll.

In einer Ausgestaltung beträgt der Abstand zwischen dem saugseitigen Endpunkt und dem druckseitigen Endpunkt in dem Längsabschnitt 15% der Länge der Profilsehne oder mehr. Der Abstand zwischen dem saugseitigen Endpunkt und dem druckseitigen Endpunkt entspricht der Länge der Profilhinterkante. Die Erfindung ist besonders geeignet für Hinterkanten, deren Dicke mindestens 15% der Länge der Profilsehne beträgt. Es ist zu berücksichtigen, dass die Neigung um den Winkel α die Länge der Profilhinterkante im Vergleich zu einer herkömmlich angeordneten dicken Hinterkante, die im rechten Winkel zur Profilsehne steht, um einen Faktor 1/sin α vergrößert. Daher entspricht eine in einem Winkel von α = 60° gegenüber der Profilsehne geneigte, erfindungsgemäße Profilhinterkante, die eine Länge von 15 % der Länge der Profilsehne aufweist, ungefähr einer herkömmlichen dicken Hinterkante mit einer Dicke von 13 % der Länge der Profilsehne.

In einer Ausgestaltung weist die Druckseite in dem Längsabschnitt einen konkav gekrümmten Abschnitt auf und eine Tangente an die Druckseite durch den druckseitigen Endpunkt liegt im Wesentlichen in der Rotorebene, wenn das Rotorblatt einen für den Teillastbetrieb optimierten Pitchwinkel aufweist.

Die Rotorebene ist im Wesentlichen die von dem Rotorblatt bei Rotation um eine Rotorachse überstrichene Ebene. Diese Betrachtung gilt streng genommen allerdings nur bei einem senkrecht zur Rotorachse angeordneten Rotorblatt. In der Praxis kann die Längsachse des Rotorblatts auch leicht gegenüber dieser Senkrechten auf die Rotorachse geneigt sein, sodass das Rotorblatt nicht in einer Ebene, sondern auf einem Konus rotiert. Daher ist jetzt und im Folgenden mit der Rotorebene stets diejenige Ebene gemeint, die bei der aktuellen Stellung des Rotorblatts die Längsachse des Rotorblatts einschließt und eine zweite Richtung, die senkrecht zur Längsachse des Rotorblatts und senkrecht zur Rotorachse angeordnet ist. Die Längsachse des Rotorblatts ist dabei definiert als Gerade durch den Mittelpunkt des kreisförmigen Querschnitts an der Blattwurzel, die senkrecht zu diesem kreisförmigen Querschnitt ausgerichtet ist.

Der für den Teillastbetrieb optimierte Pitchwinkel ist derjenige Pitchwinkel, mit dem das Rotorblatt im Teillastbetrieb bevorzugt betrieben wird. Er führt zu einer optimalen Leistungsaufnahme aus dem Wind, insbesondere bei der Auslegungsschnelllaufzahl. Mit steigender Windgeschwindigkeit erhöht sich im Teillastbetrieb die Rotordrehzahl, so dass die aerodynamischen Verhältnisse, insbesondere die lokalen Anstellwinkel am Rotorblatt bestehen bleiben. Die besondere Anordnung des hinteren Endes der konkaven Druckseite in Richtung der Rotorebene führt zu einem Abströmen der Luft im Wesentlichen in der Rotorebene, was zu einem optimalen Momentbeitrag führt. Der Abströmwinkel am saugseitigen Endpunkt kann in der gleichen Richtung gewählt werden, indem ein hinterer Abschnitt der Saugseite so ausgebildet wird, dass eine Tangente an die Saugseite durch den saugseitigen Endpunkt ebenfalls in Richtung der Rotorebene verläuft.

In einer Ausgestaltung weist der Winkel α an einer ersten Radiusposition des Rotorblatts einen Minimalwert auf und vergrößert sich bis zu einer zweiten Radiusposition des Rotorblatts, die sich in einem größeren Abstand von der Blattwurzel befindet als die erste Radiusposition, bis auf einen Maximalwert. Der Maximalwert kann beispielsweise annähernd 90° betragen, sodass die erfindungsgemäße Neigung der Hinterkante etwa an der zweiten Radiusposition endet und sich die Hinterkante außerhalb der zweiten Radiusposition im Wesentlichen senkrecht zur Profilsehne erstreckt. Der Minimalwert kann deutlich geringer als 90° sein, sodass die Neigung der Profilhinterkante zur Blattwurzel hin deutlich zunimmt. Es ergibt sich ein kontinuierlicher, fließender Übergang zwischen dem erfindungsgemäßen Längsabschnitt und den weiter zur Blattspitze hin angeordneten Rotorblattbereichen, die herkömmlich ausgestaltet sein können.

In einer Ausgestaltung beträgt der Minimalwert 70° oder weniger. Beispielsweise kann er auch 65° oder weniger oder 60° oder weniger betragen.

In einer Ausgestaltung beträgt der Maximalwert 85° oder mehr. Bevorzugt kann der Maximalwert annähernd 90° betragen.

Bei der Erfindung schneiden sich mindestens in einem Teil des Längsabschnitts eine Tangente an die Saugseite durch den saugseitigen Endpunkt und eine Tangente an die Druckseite durch den druckseitigen Endpunkt unter einem Winkel β und laufen mit zunehmendem Abstand von der Profilnasenkante auseinander. Die durch die genannten Tangenten definierten Abströmwinkel an den Endpunkten der Profilhinterkante divergieren also. Insbesondere kann die Tangente an die Saugseite durch den saugseitigen Endpunkt den Winkel β auch mit der Rotorebene einschließen, wenn die Tangente an die Druckseite durch den druckseitigen Endpunkt in der Rotorebene bzw. parallel dazu liegt. Zusätzlich zu der Verkürzung der Saugseite führt auch diese Maßnahme dazu, dass es im hinterkantennahen Bereich der Saugseite zu weniger Strömungsablösungen kommt. Bei geeigneter Bemessung der Winkel α und β kann erreicht werden, dass die Strömung im Wesentlichen bis zum saugseitigen Endpunkt an der Saugseite anliegt. Insbesondere kann Turbulenzen entgegengewirkt werden, die durch auf der Saugseite wandernde Punkte, an denen eine Strömungsablösung auftritt, hervorgerufen werden. Dies kann den von diesen Turbulenzen ausgelösten Schwingungen und die damit einhergehenden zusätzlichen Belastungen auf das Rotorblatt und den Blattanschluss zur Rotornabe mindern.

In einer Ausgestaltung liegt der Winkel β im Bereich zwischen 0° und 15°. Bei Winkeln β in diesem Bereich kann bereits eine deutliche Verbesserung der Situation bezüglich der geschilderten Strömungsablösungen erzielt werden.

In einer Ausgestaltung sind der Teil des Längsabschnitts diejenigen 20% des Längsabschnitts, die am dichtesten an der Blattwurzel angeordnet sind. In diesem blattwurzelnahen Bereich ist es besonders sinnvoll, den Strömungsablösungen auf die genannte Weise entgegenzuwirken.

In einer Ausgestaltung beträgt ein Winkel γ zwischen einer Tangente an die Druckseite durch den druckseitigen Endpunkt und der Profilhinterkante 60° oder weniger. Durch diese spitze Ausführung der "unteren Hinterkante" kann die Kutta'sche Abflussbedingung am druckseitigen Endpunkt besser erfüllt werden als bei herkömmlich angeordneten dicken Profilhinterkanten.

In einer Ausgestaltung ist die Profilhinterkante konkav gekrümmt. Sie stellt also keine geradlinige Verbindung zwischen dem saugseitigen Endpunkt und dem druckseitigen Endpunkt dar, sondern eine Kurve, die gegenüber einer solchen (gedachten) geradlinigen Verbindung nach innen gekrümmt ist. Dadurch verkleinern sich die Winkel, unter denen die Profilhinterkante mit der Druckseite und der Saugseite zusammentrifft. Der kleinere Winkel am saugseitigen Endpunkt kann eine klarere Festlegung des Abrisspunkts der Strömung am saugseitigen Endpunkt bewirken. Die Verkleinerung des Winkels γ am druckseitigen Endpunkt kann ein glattes Abfließen der Strömung an diesem Punkt begünstigen, weil die kutta'sche Abflussbedingung besser erfüllt werden kann.

Die Erfindung wird nachfolgend anhand eines in zwei Figuren dargestellten Ausführungsbeispiels näher erläutert. Es zeigen:
- Fig. 1: ein Windenergieanlagenrotorblatt in einer Draufsicht mit drei beispielhaften Schnittdarstellungen an unterschiedlichen Radiuspositionen;
- Fig. 2: einen weiteren Querschnitt durch das Rotorblatt aus Fig. 1;
- Fig. 3: einen Querschnitt durch ein anderes Rotorblatt mit einer konkav gekrümmten Profilhinterkante.

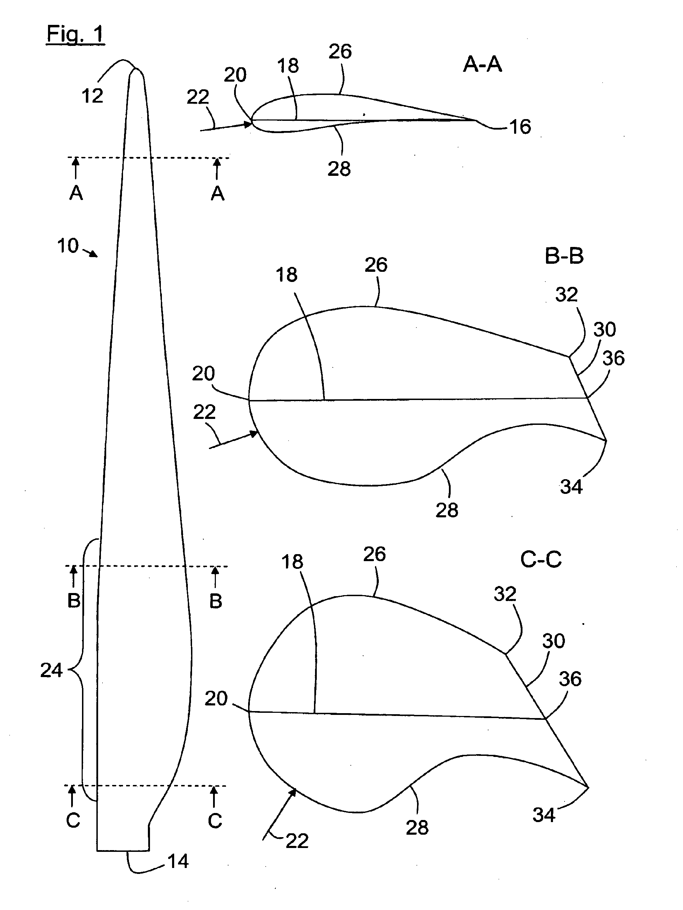

Das Windenergieanlagenrotorblatt 10 aus Figur 1 hat eine Blattspitze 12 und eine Blattwurzel 14 und weist eine Gesamtlänge, von der Blattspitze 12 bis zur Blattwurzel 14, von beispielsweise 40 m oder mehr auf.

In der Draufsicht der Figur 1 ist die ungefähre Anordnung eines Längsabschnitts 24 eingetragen, in dem das Rotorblatt 10 das nachfolgend im Einzelnen beschriebene aerodynamische Profil aufweist. Die Schnittebenen B-B und C-C befinden sich innerhalb dieses Längsabschnitts 24. Die in der Figur 1 links dargestellte Draufsicht ist schematisch und zeigt keine Einzelheiten des Profils oder der besonderen Profilhinterkante. Sie dient im Wesentlichen zur Illustration der eingezeichneten Schnittebenen A-A, B-B und C-C.

Rechts neben der Draufsicht sind die drei zu diesen Schnittebenen gehörigen Querschnittsdarstellungen gezeigt. In der Schnittebene A-A nahe der Blattspitze 12 weist das Rotorblatt 10 ein herkömmliches aerodynamisches Profil mit einer dünnen Hinterkante 16 und einer Profilsehne 18 auf. Die Profilnasenkante 20 befindet sich in maximalem Abstand von der dünnen Hinterkante 16. Die Profilsehne 18 verläuft zwischen der Profilnasenkante 20 und der dünnen Hinterkante 16. Die Saugseite 26 verläuft von der Profilnasenkante 20 bis zur dünnen Hinterkante 16 und ist konkav gekrümmt. Die Druckseite 28 verläuft ebenfalls von der Profilnasenkante 20 bis zur dünnen Hinterkante 16 und weist einen konvex gekrümmten Abschnitt auf, der an die Profilnasenkante 20 angrenzt, und einen konkav gekrümmten Abschnitt, der den hinteren Verlauf der Druckseite 28 bis hin zur dünnen Hinterkante 16 bildet. Insgesamt ist die Druckseite 28 demnach S-förmig ausgebildet.

Innerhalb des Längsabschnitts 24, insbesondere an den Schnittebenen B-B und C-C, weist das aerodynamische Profil eine Profilhinterkante 30 mit einem saugseitigen Endpunkt 32 und einem druckseitigen Endpunkt 34 auf, die in einem Abstand voneinander angeordnet sind. Der Abstand zwischen den beiden Endpunkten entspricht der Länge der Profilhinterkante 30. Die Profilhinterkante 30 verläuft zwischen den beiden Endpunkten geradlinig. Die Profilhinterkante 30 weist einen Profilhinterkantenmittelpunkt 36 auf. Die Profilnasenkante 20 befindet sich an demjenigen Punkt des Profils, der einen maximalen Abstand von dem Profilhinterkantenmittelpunkt 36 aufweist. Die Profilsehne 18 verbindet die Profilnasenkante 20 geradlinig mit dem Profilhinterkantenmittelpunkt 36.

Die Saugseite 26 verläuft innerhalb des Längsabschnitts 24 an jeder Querschnittsposition des Rotorblatts 10 von der Profilnasenkante 20 bis zum saugseitigen Endpunkt 32. Sie ist konvex gekrümmt. Die Druckseite 28 verläuft von der Profilnasenkante 20 S-förmig geschwungen, mit einem an die Profilnasenkante 20 angrenzenden, konvex gekrümmten Abschnitt und einem in diesen übergehenden, bis zum druckseitigen Endpunkt 34 führenden, konkav gekrümmten Abschnitt.

All dies gilt analog für den Querschnitt entlang der Schnittebene C-C. An dieser Radiusposition des Rotorblatts 10, nahe der Blattwurzel 14, ist die relative Profildicke größer als in der Schnittebene B-B und die Profilhinterkante 30 ist dementsprechend länger.

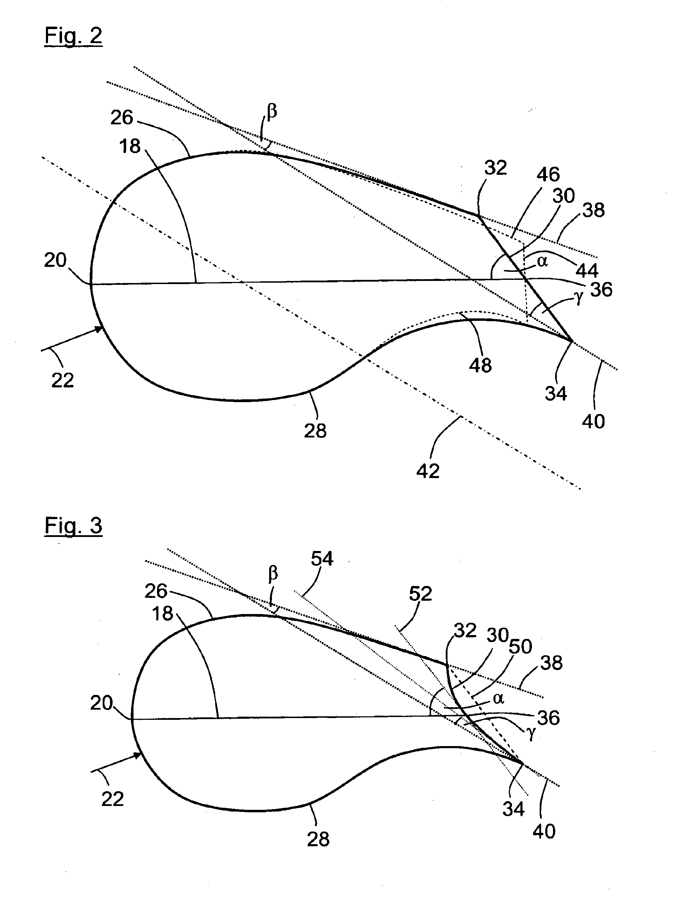

Weitere Einzelheiten des aerodynamischen Profils werden anhand der Figur 2 erläutert, die ebenfalls einen beispielhaften Schnitt durch das Windenergieanlagenrotorblatt 10 innerhalb des Längsabschnitts 24 zeigt. Die bereits anhand der Schnittdarstellung B-B der Figur 1 erläuterten Merkmale sind mit den dort verwendeten Bezugszeichen versehen und werden nicht erneut erläutert.

Gut erkennbar ist die geneigte Anordnung der Profilhinterkante 30 in einem Winkel α gegenüber der Profilsehne 18. Im dargestellten Beispiel beträgt der Winkel α ungefähr 60°. In Richtung der Profilsehne 18 betrachtet ist der saugseitige Endpunkt 32 näher an der Profilnasenkante 20 angeordnet als der druckseitige Endpunkt 34. Ebenfalls eingezeichnet sind eine Tangente 38 an die Saugseite 26 durch den saugseitigen Endpunkt 32 und eine Tangente 40 an die Druckseite 28 durch den druckseitigen Endpunkt 34. Die Tangenten 38, 40 schneiden sich unter einem Winkel β, der im Beispiel etwa 13° beträgt. Die Tangente 40 an die Druckseite 28 durch den druckseitigen Endpunkt 34 verläuft dabei im Wesentlichen parallel zur strichpunktiert eingezeichneten Rotorebene 42.

Der Winkel γ zwischen der Profilhinterkante 30 und der Tangente 40 an die Druckseite 28 durch den druckseitigen Endpunkt 34 beträgt im Beispiel etwa 25°.

Zum Vergleich gestrichelt dargestellt ist der Verlauf eines herkömmlichen aerodynamischen Profils mit einer dicken Hinterkante 44, die senkrecht zur Profilsehne 18 angeordnet ist. Bei dem herkömmlichen Profil schließen sich an die dicke Hinterkante 44 ebenfalls eine Saugseite 46 und eine Druckseite 48 an.

Wie der Vergleich zeigt, ist bei der Erfindung der saugseitige Endpunkt 32 der dicken Hinterkante 30 in Richtung der Profilsehne 18 näher an der Profilnasenkante 20 angeordnet als der saugseitige Endpunkt der dicken Hinterkante 44. Der druckseitige Endpunkt 34 der dicken Hinterkante 30 ist gegenüber dem druckseitigen Endpunkt der dicken Hinterkante 44 nach hinten versetzt, d.h. weiter von der Profilnasenkante 20 entfernt.

Im Vergleich zur herkömmlichen Saugseite 46 ist die Saugseite 26 durch den vorgezogenen saugseitigen Endpunkt 32 verkürzt und durch die Ausbildung des Winkels β außerdem weiter von der Profilsehne 18 entfernt angeordnet. Hierdurch ist die Krümmung der Saugseite 26 gegenüber der herkömmlichen Saugseite 46 verringert. All dies trägt dazu bei, Strömungsablösungen in diesem Bereich zu verhindern.

Fig. 3 zeigt einen Querschnitt durch ein anderes Rotorblatt. Es werden die in den vorigen Figuren verwendeten Bezugszeichen auch für die entsprechenden Bestandteile dieses Rotorblatts verwendet. Ein Unterschied zum Querschnitt der Fig. 2 besteht darin, dass die Profilhinterkante 30 nicht geradlinig zwischen dem saugseitigen Endpunkt 32 und dem druckseitigen Endpunkt 34 verläuft, sondern konkav gekrümmt ist. Zum Vergleich ist eine gedachte geradlinige Verbindung 50 dieser beiden Punkte eingezeichnet, die einen Abstand von der konkav gekrümmten Profilhinkterkante 30 aufweist. Der Winkel α wird weiterhin zwischen der Profilsehne 18 und der Profilhinterkante 30 gemessen, wegen der Krümmung der Profilhinterkante 30 genauer zwischen der Profilsehne 18 und einer Tangente 52 an die Profilhinterkante 30 an den Profilhinterkantenmittelpunkt 36.

Durch die Krümmung der Profilhinterkante 30 verkleinert sich auch der Winkel γ, der wegen der Krümmung zu messen ist zwischen einer Tangente 54 an die Profilhinterkante 30 am druckseitigen Endpunkt 34 und der Tangente 40 an die Druckseite 28 durch den druckseitigen Endpunkt 34.

### Liste der verwendeten Bezugszeichen:

- 10: Windenergieanlagenrotorblatt
- 12: Blattspitze
- 14: Blattwurzel
- 16: dünne Hinterkante
- 18: Profilsehne
- 20: Profilnasenkante
- 22: Anströmrichtung
- 24: Längsabschnitt
- 26: Saugseite
- 28: Druckseite
- 30: Profilhinterkante
- 32: saugseitiger Endpunkt
- 34: druckseitiger Endpunkt
- 36: Profilhinterkantenmittelpunkt
- 38: Tangente an Saugseite 26 durch Endpunkt 32
- 40: Tangente an Druckseite 28 durch Endpunkt 34
- 42: Rotorebene
- 44: dicke Hinterkante
- 46: herkömmliche Saugseite
- 48: herkömmliche Druckseite
- 50: geradlinige Verbindung saug-/druckseitiger Endpunkt
- 52: Tangente an Profilhinterkante am Profilhinterkantenmittelpunkt
- 54: Tangente an die Profilhinterkante am druckseitigen Endpunkt

## Patentansprüche

1. Windenergieanlagenrotorblatt (10) mit einer Blattwurzel (14), einer Blattspitze (12) und einem aerodynamischen Profil, das in einem Längsabschnitt (24) des Rotorblatts (10) ausgebildet ist und eine Druckseite (28), eine Saugseite (26), eine Profilnasenkante (20), eine Profilsehne (18) und eine Profilhinterkante (30) mit einem saugseitigen Endpunkt (32), an dem die Saugseite (26) und die Profilhinterkante (30) zusammentreffen, und einem von dem saugseitigen Endpunkt (32) beabstandeten druckseitigen Endpunkt (34), an dem die Druckseite (28) und die Profilhinterkante (30) zusammentreffen, aufweist, wobei ein Winkel a zwischen der Profilsehne (18) und der Profilhinterkante (30) kleiner ist als 90° und der saugseitige Endpunkt (32) in Richtung der Profilsehne (18) näher an der Profilnasenkante (20) angeordnet ist als der druckseitige Endpunkt (34), **dadurch gekennzeichnet, dass** mindestens in einem Teil des Längsabschnitts (24) eine Tangente (38) an die Saugseite durch den saugseitigen Endpunkt (32) und eine Tangente (40) an die Druckseite durch den druckseitigen Endpunkt (34) sich unter einem Winkel β schneiden und mit zunehmendem Abstand von der Profilnasenkante (20) auseinanderlaufen, so dass durch die Tangenten (38, 40) definierte Abströmwinkel an den Endpunkten (32, 34) der Profilhinterkante (30) divergieren.

2. Windenergieanlagenrotorblatt (10) nach Anspruch 1, **dadurch gekennzeichnet, dass** mindestens in einem Teil des Längsabschnitts (24) der Winkel α 80° oder weniger beträgt.

3. Windenergieanlagenrotorblatt (10) nach Anspruch 1 oder 2, **dadurch gekennzeichnet, dass** sich der Längsabschnitt (24) über eine Länge im Bereich von 10 % bis 40 % der Gesamtlänge des Rotorblatts (10) erstreckt.

4. Windenergieanlagenrotorblatt (10) nach einem der Ansprüche 1 bis 3, **dadurch gekennzeichnet, dass** der Längsabschnitt (24) einen Abstand von 15 % oder weniger der Gesamtlänge des Rotorblatts (10) von der Blattwurzel (14) aufweist.

5. Windenergieanlagenrotorblatt (10) nach einem der Ansprüche 1 bis 4, **dadurch gekennzeichnet, dass** in dem Längsabschnitt (24) die relative Profildicke 0,2 oder mehr beträgt.

6. Windenergieanlagenrotorblatt (10) nach einem der Ansprüche 1 bis 5, **dadurch gekennzeichnet, dass** in dem Längsabschnitt (24) der Abstand zwischen dem saugseitigem Endpunkt (32) und dem druckseitigen Endpunkt (34) 15 % der Länge der Profilsehne (18) oder mehr beträgt.

7. Windenergieanlagenrotorblatt (10) nach einem der Ansprüche 1 bis 6, **dadurch gekennzeichnet, dass** der Winkel α an einer ersten Radiusposition des Rotor-blatts (10) einen Minimalwert aufweist und sich bis zu einer zweiten Radiusposition des Rotorblatts (10), die sich in einem größeren Abstand von der Blattwurzel (14) befindet als die erste Radiusposition, bis auf einen Maximalwert vergrößert,

8. Windenergieanlagenrotorblatt (10) nach Anspruch 7, **dadurch gekennzeichnet, dass** der Minimalwert 70° oder weniger beträgt.

9. Windenergieanlagenrotorblatt (10) nach Anspruch 7 oder 8, **dadurch gekennzeichnet, dass** der Maximalwert 85° oder mehr beträgt.

10. Windenergieanlagenrotorblatt (10) nach einem der Ansprüche 1 bis 9, **dadurch gekennzeichnet, dass** der Winkel β im Bereich zwischen 0° und 15° liegt.

11. Windenergieanlagenrotorblatt (10) nach einem der Ansprüche 1 bis 10, **dadurch gekennzeichnet, dass** der Teil des Längsabschnitts (24) diejenigen 20 % des Längsabschnitts (24) sind, die am dichtesten an der Blattwurzel (14) angeordnet sind.

12. Windenergieanlagenrotorblatt (10) nach einem der Ansprüche 1 bis 11, **dadurch gekennzeichnet, dass** ein Winkel γ zwischen einer Tangente (40) an die Druckseite durch den druckseitigen Endpunkt (34) und der Profilhinterkante (30) 60° oder weniger beträgt.

13. Windenergieanlagenrotorblatt (10) nach einem der Ansprüche 1 bis 12, **dadurch gekennzeichnet, dass** die Profilhinterkante (30) konkav gekrümmt ist.

## Claims

1. A wind turbine rotor blade (10) with a blade root (14), a blade tip (12) and an aerodynamic profile which is formed in a longitudinal portion (24) of the rotor blade (10) and comprises a pressure side (28), a suction side (26), a leading edge (20), a chord (18) and a trailing edge (30) with a suction side endpoint (32) where the suction side (26) and the trailing edge (30) of the profile converge, and a pressure side endpoint (34), spaced apart from the suction side endpoint (32), where the pressure side (28) and the trailing edge (30) converge, wherein an angle α between the chord (18) and the trailing edge (30) is smaller than 90° and the suction side endpoint (32) is arranged nearer to the leading edge (20) in the direction of the chord (18) than the pressure side endpoint (34), **characterised in that** at least in a part of the longitudinal portion (24) a tangent (38) to the suction side through the suction side endpoint (33) and a tangent (40) to the pressure side through the pressure side endpoint (34) intersect each other in an angle β and diverge with increasing distance from the leading edge (20), so that downstream angles defined by the tangents (38, 40) diverge on the endpoints (32, 34) of the trailing edge (30).

2. The wind turbine rotor blade (10) according to claim 1, **characterised in that** the angle α is 80° or less in at least a part of the longitudinal portion (24).

3. The wind turbine rotor blade (10) according to claim 1 or 2, **characterised in that** the longitudinal portion (24) extends across a length in the range of 10% to 40% of the total length of the rotor blade (10).

4. The wind turbine rotor blade (10) according to any one of claims 1 to 3, **characterised in that** the longitudinal portion (24) is in a distance from the blade root (14) of 15% or less of the total length of the rotor blade (10).

5. The wind turbine rotor blade (10) according to any one of claims 1 to 4, **characterised in that** in the longitudinal portion (24) the relative thickness of the profile is 0,2 or more.

6. The wind turbine rotor blade (10) according to any one of claims 1 to 5, **characterised in that** in the longitudinal portion (24), the distance between the suction side endpoint (32) and the pressure side endpoint (34) is 15% or more of the length of the chord (18).

7. The wind turbine rotor blade (10) according to any one of claims 1 to 6, **characterised in that** at a first radius position of the rotor blade (10), the angle α has a minimum value, and increases to a maximum value up to a second radius position of the rotor blade (10), which is in a greater distance from the blade root (14) than the first radius position.

8. The wind turbine rotor blade (10) according to claim 7, **characterised in that** the minimum value is 70° or less.

9. The wind turbine assembly rotor blade (10) according to claim 7 or 8, **characterised in that** the maximum value is 85° or more.

10. The wind turbine rotor blade (10) according to any one of claims 1 to 9, **characterised in that** the angle β is in a range between 0° and 15°.

11. The wind turbine rotor blade (10) according to any one of claims 1 to 10, **characterised in that** the part of the longitudinal portion (24) are those 20% of the longitudinal portion (24) which are arranged nearest to the blade root (14).

12. The wind turbine rotor blade (10) according to any one of claims 1 to 11, **characterised in that** an angle γ between a tangent (40) to the pressure side through the pressure side endpoint (34) and the trailing edge (30) is 60° or less.

13. The wind turbine rotor blade (10) according to any one of claims 1 to 12, **characterised in that** the trailing edge (30) is concavely curved.

## Revendications

1. Pale de rotor d'éolienne (10) avec un pied de pale (14), un bout de pale (12) et un profile aérodynamique qui est formé dans une partie longitudinale (24) de la pale de rotor (10) et comporte un intrados (28), un extrados (26), un bord d'attaque (20), une corde de profil (18) et un bord de fuite (30) avec un bout d'extrados (32) où l'extrados (26) et le bord de fuite (30) du profil convergent, et un bout d'intrados (34), espacé du bout d'extrados (32), où l'intrados (28) et le bord de fuite (30) convergent, un angle α entre la corde de profil (18) et le bord de fuite (30) étant plus petit que 90° et le bout d'extrados (32) étant arrangé plus proche au bord d'attaque (20) dans la direction de la corde de profil (18) que le bout d'intrados (34), **caractérisée en ce que** au moins dans une part de la partie longitudinale (24) une tangente (38) sur l'extrados à travers le bout d'extrados (33) et une tangente (40) sur l'intrados à travers le bout d'intrados (34) se coupent dans un angle β et divergent avec distance croissante du bord d'attaque (20), de sorte que des angles de fuite définis par les tangentes (38, 40) divergent dans les bouts (32, 34) du bord de fuite (30).

2. Pale de rotor d'éolienne (10) selon la revendication 1, **caractérisée en ce que** l'angle α est 80° ou moins dans au moins une part de la partie longitudinale (24).

3. Pale de rotor d'éolienne (10) selon la revendication 1 ou 2, **caractérisée en ce que** la partie longitudinale (24) s'étend à travers une longueur dans la plage de 10% à 40% de la longueur totale de la pale de rotor (10).

4. Pale de rotor d'éolienne (10) selon l'une quelconque des revendications 1 à 3, **caractérisée en ce que** la partie longitudinale (24) est dans une distance du pied de pale (14) de 15% ou moins de la longueur totale de la pale de rotor (10).

5. Pale de rotor d'éolienne (10) selon l'une quelconque des revendications 1 à 4, **caractérisée en ce que** l'épaisseur relative du profil est 0,2 ou plus dans la partie longitudinale (24).

6. Pale de rotor d'éolienne (10) selon l'une quelconque des revendications 1 à 5, **caractérisée en ce que** dans la partie longitudinale (24), la distance entre le bout d'extrados (32) et le bout d'intrados (34) est 15% ou plus de la longueur de la corde de profil (18).

7. Pale de rotor d'éolienne (10) selon l'une quelconque des revendications 1 à 6, **caractérisée en ce que** dans une première position de rayon de la pale de rotor (10), l'angle α a une valeur minimale, et accroît à une valeur maximale jusqu à une deuxième position de rayon de la pale de rotor (10), qui est dans une distance plus grande du pied de pale (14) que la première position de rayon.

8. Pale de rotor d'éolienne (10) selon la revendication 7, **caractérisée en ce que** la valeur minimale est 70° ou moins.

9. Pale de rotor d'éolienne (10) selon la revendication 7 ou 8, **caractérisée en ce que** la valeur maximale est 85° ou plus.

10. Pale de rotor d'éolienne (10) selon l'une quelconque des revendications 1 à 9, **caractérisée en ce que** l'angle β est dans une gamme entre 0° et 15°.

11. Pale de rotor d'éolienne (10) selon l'une quelconque des revendications 1 à 10, **caractérisée en ce que** la part de la partie longitudinale (24) sont les 20% de la partie longitudinale (24) qui se trouvent le plus proche au pied de pale (14).

12. Pale de rotor d'éolienne (10) selon l'une quelconque des revendications 1 à 11, **caractérisée en ce que** un angle γ entre une tangente (40) sur l'intrados à travers le bout d'intrados (34) et le bord de fuite (30) est 60° ou moins.

13. Pale de rotor d'éolienne (10) selon l'une quelconque des revendications 1 à 12, **caractérisée en ce que** le bord de fuite (30) est courbé de façon concave.
